(19) Europäisches Patentamt
European Patent Office
Office européen des brevets

(11) **EP 3 301 600 B1**

(12) **EUROPEAN PATENT SPECIFICATION**

(45) Date of publication and mention
of the grant of the patent:
**31.03.2021 Bulletin 2021/13**

(51) Int Cl.:
***G06F 21/52*** (2013.01)   ***G06F 11/36*** (2006.01)
***G06F 11/28*** (2006.01)

(21) Application number: **16191619.2**

(22) Date of filing: **29.09.2016**

(54) **METHOD AND APPARATUS FOR SIGNATURE TRACING**

VERFAHREN UND VORRICHTUNG FÜR DIE SIGNATURVERFOLGUNG

PROCÉDÉ ET APPAREIL DE SUIVI DE SIGNATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.04.2018 Bulletin 2018/14**

(73) Proprietor: **Commsolid GmbH**
**01099 Dresden (DE)**

(72) Inventor: **Hesse, Kay**
**01129 Dresden (DE)**

(74) Representative: **Lippert Stachow Patentanwälte**
**Rechtsanwälte**
**Partnerschaft mbB**
**Krenkelstraße 3**
**01309 Dresden (DE)**

(56) References cited:
**WO-A2-01/97010        US-A- 5 974 529**
**US-A1- 2008 155 355    US-A1- 2012 066 551**

**Description**

The invention discloses a method for tracing data in a system on chip with a static structure for evaluating an actual data stream.

The invention also discloses an apparatus for post-processing tracing data in a system with static structure that uses the claimed method.

1. Problem Statement

With the ever-increasing usage of SoC (System-on-Chip) more and more functions are put into a single silicon chip. This causes a decrease in the pin-to-feature ratio, meaning that there is a huge portion of logic that has no direct connection to chip pins and hence is not directly observable, using e.g. tools like a logic analyzer. Therefore, not every logic that is available on a chip can be directly addressed or read-out by a direct pin connection.

On the other hand, this ever-increasing complexity of the chips makes it necessary to provide means for the developer to gain insight into the actual data processing on silicon chip. This is required for various reasons: On the one hand, one should be able to understand the actual sequence of events for debugging of embedded logic and on the other hand one should be able to profile the system (for example measuring processing efficiency) and to optimize the system based on that profiling data.

One general method that can be applied to obtain an insight view is tracing, i.e. to forward information on the sequence of events to a recording device, either in real-time by using an external interface to send this data to that recording device or by using an embedded buffer which is read-out post-mortem.

Specifically, tracing will create some form of an event log list (e.g. a list of programming steps processed by an embedded core), which is typically evaluated offline by presenting the data in a human readable form (e.g. a flow diagram). System diagnostics using XML serialization and hash values are disclosed in US 2008/0155355 A1.

There are a number of contradicting requirements for tracing that cannot be met all, therefore some form of an acceptable compromise needs to be found: For finding such a kind of compromise the following aspects should be considered: a detailed view into all interesting internal events should be provided, this means a detailed log with high time resolution over a long period; the use of as few external pins as possible, because most modern SoC's are pin-limited, i.e. the usable features are limited by the number of external interfaces, so tracing must not limit these limitation further; the use of low-cost recording equipment, e.g. cheap hard disks; Tracing shall be non-intrusive, i.e. it does not impact the actual sequence of events (e.g. do not introduce artifacts like delays that occur just because of tracing; No overhead should be added, both in gate count as well as in power for the trace infrastructure; Tracing should be allowed for an easy change of operating modes, e.g. trace in a lab environment but not in a real user environment, without requiring e.g. a recompile of the embedded code; and last but not least tracing should be allowed for dynamic change of mode, i.e. switch tracing on and off without necessity to rebuild or restart the system under test.

Background of the invention

Tracing

The most common approach for tracing of embedded processor code is to insert specific trace commands (essentially equivalent to printf statements), which format the interesting information (e.g. contents of memory locations), together with a time stamp and write that explicitly to either an external interface (like USB) or an internal buffer (which is then later written to an external interface). This approach has the advantage of being very flexible and providing all interesting information, because it is explicitly programmed into the code. But it has the following drawbacks: It increases the code size of the embedded program which consumes valuable embedded RAM (Random Access Memory) and it is difficult to switch between a trace and a non-trace scenario. Either the explicit trace code must be removed (e.g. using a preprocessor) and then the code must be re-compiled, or each trace command must additionally be guarded by some form of condition evaluation, e.g. the value of a specific control bit. Furthermore, the trace code is not non-intrusive as the explicitly added code takes time to execute. Moreover, if the trace code is removed by a preprocessor for a non-trace scenario the timing behavior of the whole system is changed. This might mean a different sequence of concurrent events than the one observed while the trace code is active. Beyond that the trace bandwidth is dependent on the number of inserted trace commands.

Another common approach for tracing of embedded processor code is to add hardware that monitors the embedded processor and automatically generates the trace data by e.g. streaming the program counter to the trace interface. This solves a number of the drawbacks of the above mentioned method: It does not add code, it is rather easy to switch between trace and non-trace scenarios and it is non-intrusive. However, this second method requires a much higher bandwidth on the trace interface and adds an overhead to the gate count (although typically a relative small overhead). It also is not as flexible as it would not trace out any other type of information, because hardware can only trace out the datagrams hard-coded at time of design, software-based tracing can in principle trace out any kind of data.

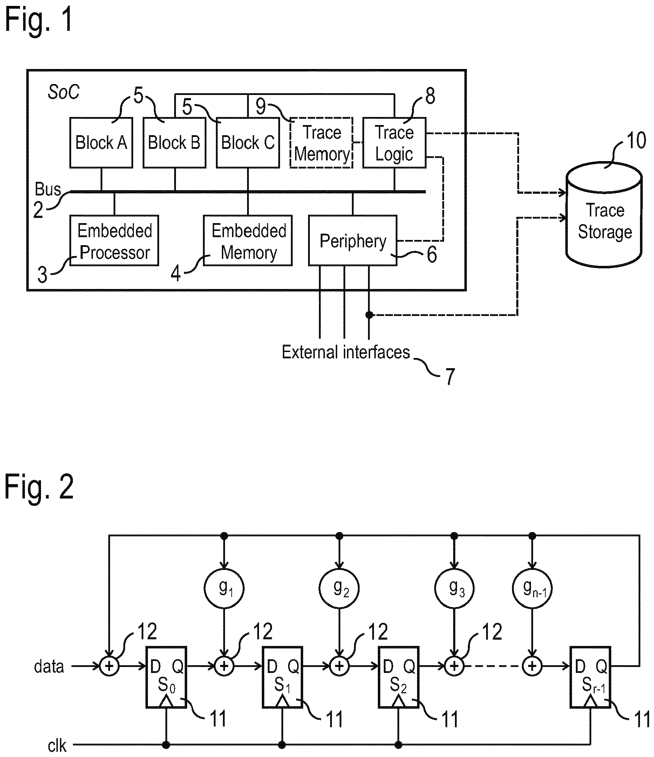

Figure 1 shows a typical scenario on a SoC 1. There is an internal bus system 2 which interconnects an embedded processor 3 with its memory 4, some functional blocks 5 and periphery 6 to external interfaces 7. The tracing functionality in this example is characterized by the following features: The tracing logic may be connected directly to some of the functional blocks 5, as shown for blocks B and C. This would be a form of non-intrusive hardware observation. The tracing logic can receive trace data via the bus 2 by explicit processor transactions (e.g. printf). The logged trace data may be temporarily stored in memory for later dumping. There are two possible locations: - in a dedicated trace memory 9, often realized as a FIFO (First-In-First-Out) or ring buffer or - in a part of the functional embedded memory 4, typically managed by the embedded processor 3 with some pointer handling.

The logged trace data may be streamed out on-the-fly via an external interface 7. There are some options: The streaming of the logged trace data may be continuous, i.e. data are sent out as they are generated. Or the streaming may be block-oriented, i.e. data are stored temporarily in memory and only if a certain amount has been logged the data are sent out via the interface 7. Another option is that the data may be sent via a dedicated trace interface (shown in figure 1 as a dashed line - from trace logic 8 to trace storage 10) or the data may be sent via a shared functional interface. This typically is only used if the complete trace is first stored internally and then dumped out post-mortem.

The trace storage is symbolized here as a simple hard disk but it could be any other system that can receive the trace data from the SoC interface, e.g. a PC or a logic analyzer.

The trace log processing necessary for a human-friendly visualization is not shown here.

It should be mentioned that the trace logic may be built in a way that it handles multiple concurrent trace streams, e.g. to distinguish hardware observation from explicit trace logs from the processor. These separate streams may be either multiplexed in some form to transport them via a single interface or multiple separate interfaces could be used with separate attached trace storages (although this would contradict the goal of using as few external interface resources as possible).

It should further be mentioned that in an extreme case the tracing may be completely handled by the embedded processor with no extra trace block at all. In this case there would be no hardware observation (as it was shown in figure 1 for blocks B and C). The logged date could still be stored temporarily or streamed out on-the-fly via an external interface.

Cyclic redundancy check (CRC) Usage

A cyclic redundancy check (CRC) is an error-detecting code commonly used in digital networks and storage devices to detect accidental changes to raw data. Blocks of data entering these systems get a short check value attached, based on the remainder of a polynomial division of their contents. On retrieval, the calculation is repeated and, in the event the check values do not match, corrective action can be taken against data corruption. CRCs are so called because the check (data verification) value is a redundancy (it expands the message without adding information) and the algorithm is based on cyclic codes.

CRC checksums and signatures as such are not a new concept, in fact, they are already used in two main fields of application:

Firstly, Data integrity checking for data transmission and storage. CRC checksums are used to detect data corruption by comparing the transmitted or stored checksum against one that was calculated for the data block under test, and secondly, signature checks in production test or quality assurance. Typically, data is transferred in blocks of a certain size. Each of these blocks is handled individually with their own CRC, independent of other such blocks. The "data block under test" means the data block currently processed for CRC. Here, a CRC checksum over some stream of binary values (that can be derived from any observation point in a system) from a *known good device* (KGD) is checked against the same type of checksum taken from the device under test (DUT). If both match then the DUT has passed the test.

A CRC checksum is calculated based on a generator polynomial, which can be implemented in hardware as linear feedback shift registers (LFSR), using flip-flops and XOR gates as shown in figure 2 (the functions $g_i$ are one, if $x^i$ is part of the polynomial, otherwise they are zero.). The polynomial is said to be of degree r if the highest exponential in the polynomial is r. Commonly used polynomials are e.g. $x^{16} + x^{12} + x^5 + 1$ (X.25 protocol; degree 16) or $x^{32} + x^{26} + x^{22} + x^{16} + x^{12} + x^{11} + x^{10} + x^8 + x^7 + x^5 + x^4 + x^2 + x + 1$ (Ethernet; degree 32).

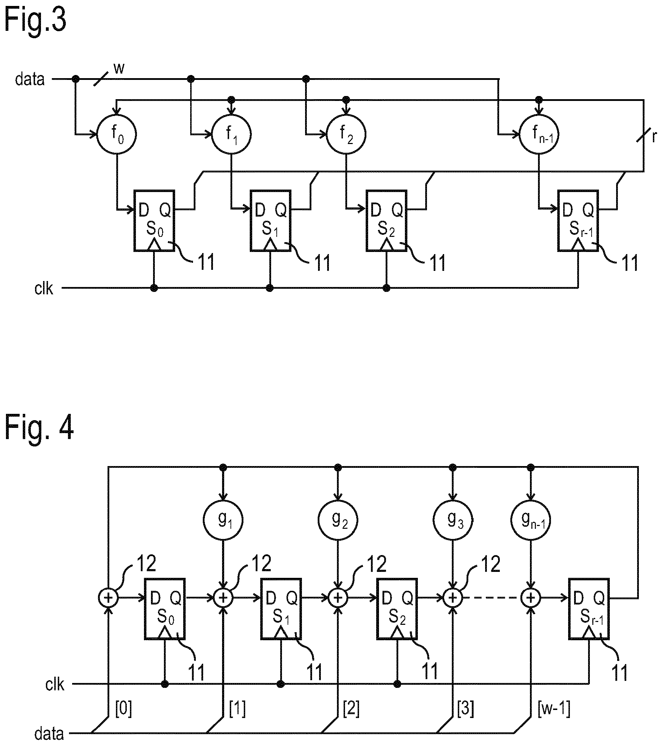

While this basic implementation assumes a bitwise calculation (the bitstream to check is serially shifted into the LFSR), it is also possible to convolute multiple single bit steps into one by using a hardware structure shown in figure 3 to form the checksum with one word per step. In this case there is a function for every LFSR bit position that depends in general on all r LFSR bits and all $w$ data word bits and essentially is an XOR-tree. The word width $w$ and the LFSR width r do not have to be the same (i.e. it is possible to calculate a 16-bit CRC from 32-bit words in one step) .

Another related implementation is a so-called MISR (multiple input signature register - see figure 4), which is essentially the LFSR from figure 2, but with additional parallel data inputs which are XORed into each LFSR bit position (this works only if the data word width $w$ is equal to the CRC width $r$).

It should be mentioned that for the same polynomial used in an LFSR according to figure 2 and in a MISR according to figure 4 the resulting signature after $P$ data words is not identical (i.e. mathematically both implementations calculate different functions), but the MISR signature can also be used for the purpose of this invention. This is because it shares the main feature of the LFSR to detect even small changes in the input stream and produces a different signature. Using the convoluted implementation according to figure 3, however, will produce the exact same result for the same data stream as the simple implementation according to figure 2.

In order to meet the ever-increasing complexity of system-on-chip (SoC) and to provide effective means for developers to gain insight into actual data processing on silicon despite high logic density and decrease in the pin-to-feature ratio, it is necessary to find new solutions to address these problems.

It is therefore the objective of the invention to provide a novel approach that can address the ever-increasing complexity of systems-on-chips and which offers the possibility to profile the system and optimizing the processing efficiency of that system without the disadvantages of the prior art.

The object of the invention will be solved by a method for tracing data in a system with a static structure for evaluating an actual data stream, the method comprising the following steps:

- loading an event representation file of a static program code,
- requesting a trace datagram of a trace group from a trace storage, whereas the trace group consists of trace datagrams and represents one possible execution path of the program code,
- post-processing the trace datagram by

  - calculating a hypothetic checksum of a potential stream of events of the event representation file,
  - comparing the hypothetic checksum with a checksum of the trace datagram,
  - if the checksums mismatch, backtracking by calculating a new hypothetic checksum and compare it with the checksum of the requested trace datagram, and continuing backtracking until they match, whereas an excessive backtracking is avoided by cutting the logging interval short at the first occurrence of an interrupt,

- if the checksums match, requesting a next trace datagram of the trace group and perform the post-processing of the next trace datagram,
- continuing until all trace datagrams of the trace group have been checked, whereas the result represents the reconstructed trace of the data stream.

A stream of events will be understood as a sequence of steps that a static program code follows. One step is a transition from one event to another if there is a transition between these two events. In the case of tracing data in embedded codes, events will be understood as opcodes which a program or process runs through. In the case of a finite state machine (FSM) events will be understood as states which a FSM can process.

A trace group consists of trace datagrams and represents one possible execution path of a program. A trace datagram is therefore an interval consisting of P steps, whereas the start state and the checksum over this interval are logged. The advantage of this feature is that not the raw data of a program code is traced rather a compressed data stream namely the trace data stream compressed by using CRC checksums. Therefore, a trace datagram is characterized by its checksum and its length 1. In general, the subject-matter of the invention combines the advantages of independent hardware monitoring with a rather low trace bandwidth by compressing the trace data stream using CRC checksums (also known as signatures) instead of the raw data. This will be called signature tracing. Essentially, everything that can be converted into a sequence of integer numbers potentially allows signature tracing.

For using this method the event representation file is filled with the static structure of the system, whereas the static structure is a sequence of opcodes or states of a hardware state machine or generally of events. Therefore, this method of signature tracing can be used for embedded code or for hardware state machines.

The tracing datagram is formed by compressing raw trace data with cyclic redundancy check (CRC) checksums.

In the case of tracing a sequence of opcode or events each line of the code is divided into an address part, an optional label to mark jump or call targets and an opcode mnemonic. These mnemonics are just generic placeholders for typical processor operations like loading of immediate values into a register or addition of two registers. For the sake of simplicity, it is assumed that these opcodes all fit into one memory word each, so subsequent opcodes are located on incremental addresses. In general, the program can be described as a directed - but typically not acyclic -, graph, where the opcodes form the nodes and the transitions form the edges. The important aspect for tracing here is that it is typically not possible to predict which program path is taken, as these conditional jumps may be dependent on previous input that is unknown in advance. Therefore, the post-processing is necessary for reconstructing the correct data stream that has been performed by the system.

In the case of tracing the states of a hardware state machine (FSM) signature tracing can also be applied. Hardware FSMs always contain a state vector that encodes the state as a binary number. Depending on the number of states that have to be encoded the state vector must contain a certain number of bits. Whatever encoding is used, it would just be considered a binary number of width $w$ and fed into the CRC logic to calculate the signature or checksum for a predefined interval of steps $P$. Again, being dependent on dynamic input from outside the FSM, it is in general not possible to predict upfront the state sequences taken.

Thereby the raw trace data is a sequence of events or opcodes or states whereas for compressing the raw trace data the sequence of events or states is divided into groups of $P$ steps forming an interval respectively and for each interval a start address or a start state and a checksum is logged. The advantage lays in the reduction of bandwidth, because a formerly bandwidth of "$P$*wordwidth" can be reduced to "1*wordwidth + 1*CRC-width" over a time period of $P$ steps. After that it is the task of the post-processing to infer the actual code execution path from the start address and the logged signature or checksum, based on the knowledge of the static program code. The logging of the start address or start state and the checksum of each interval will be a countermeasures of aliasing. If, however, the start address (or state for FSMs) is logged for each CRC interval, the chance for each interval to be wrongly inferred will be $2^{-r}$, with $r$ represents the bit number of the CRC signature, but there is no error propagation into subsequent intervals anymore as described later in detail.

In a preferred embodiment the logging interval is performed with an adaptive length 1. In the case of interrupt handling in a static structure it becomes more complicated to reconstruct the actual execution path of the system, because each step can have multiple followers and if vectorized interrupts are used there are not just two, but many potential follow addresses. For the post processing of the logged trace datagram this poses a problem, as now the number of potential paths to check may explode. Basically, the product $\prod_{i=0}^{i<l} t_i$ becomes much bigger as now each step has multiple targets, i.e. $t_i \gg 1$. Therefore, it is advantageous to add an indication to the trace datagram in which step an interrupt occurred, so not every step need to be checked if there was backtracking.

In an even more preferred embodiment the length 1 of the interval is adapted according to a first occurrence of an interrupt or a certain number of jumps in the program code. This means that an excessive backtracking can be avoided by cutting the logging interval short at the first occurrence of an interrupt, i.e. an interrupt need only be checked for at the last step. This would however increase the necessary trace bandwidth, because the ratio of trace datagrams (containing the pairs of start address and signature/checksum) to number of steps per interval would become higher for shortened intervals. But an adaptive-length scheme could stop the logging interval after a certain number of jumps taken. Longer periods of pure linear code would then lead to longer logging intervals (and hence a reduced tracing bandwidth), while code sections with a lot of jumps would lead to shorter logging intervals and a higher trace bandwidth but with reduced post processing effort.

In another embodiment of the invention the sequence of opcodes/events or states of the hardware state machine is encoded as a binary number of width $w$ respectively. The width $w$ depends on the number of states or events that has to be encoded. For the signature tracing different encoding schemes can be used, e.g. also a 5-bit one-hot encoding. Whatever encoding is used, it would just be considered a binary number of width $w$ and fed into a CRC logic to calculate the signature for a predefined interval of steps.

Therefore, for each binary number of $w$ bits and each predefined interval of $P$ steps a checksum of r bits is calculated, which results in a logging interval of $P*w = m$ bits.

For preventing wrongly inferred paths from a CRC a continuity check will be performed between consecutive intervals such that the last inferred address of the previous interval is checked against the start address of the next interval (so intervals have an overlap of 1 value).

Typically, CRC checksums are built over bit strings (much) longer than the CRC itself is wide. This causes aliasing of checksums such that two different bit strings may result in the same CRC checksum. In the context of signature trace, this means that the post processing may find an opcode path that shows the same signature as the real one, but is different in its actual sequence. For signature tracing a logged path through either a sequence of opcodes or FSM states consists of $P$ steps with binary representations of $w$ bits each (addresses or state encodings), resulting in a logging interval of $P*w = m$ bits. The result is then a CRC signature of $r$ bits. So, there are $2^m$ possible path bit strings that map to $2^r$ different CRCs. This means that $2^{m-r}-1$ aliased paths map to the same CRC as the correct path. In other words there is a probability of $$p = \frac{2^{m-r}-1}{2^m-1} = \frac{number\ of\ aliasing\ other\ paths}{total\ number\ of\ other\ paths}$$ for the post processing to infer a wrong path from a given CRC signature. For sufficiently large m this can be simplified to $p \approx 1/2^r$.

Since the probability to infer a wrong logging path is dependent on the width $r$ of the CRC signature, one obvious approach to minimize the potential for false traces is to increase the CRC width. One bit more in the signature brings the probability down to half. The drawback of this approach is increased logic complexity of the CRC circuit (with increased dynamic power and area consumption) and an increased trace bandwidth (more CRC bits to be stored). The start address (or start state) used for the hypothesis checker function could be the last inferred address from the previous logging interval. This, however, together with the probability of aliasing, would increase the likelihood of a wrongly inferred opcode path, especially for the later CRC intervals. With only the inferred last address as the starting point for the next interval, all inferred previous paths must be correct for the last interval to be processed correctly. Each interval has a chance of $2^{-r}$ to be corrupted by aliasing. For the last interval of a long log with $L$ logging intervals this leads to a likelihood of $p_c=(1-2^{-r})^L$ of being correctly inferred. With reasonable assumptions of $r = 16$ for the CRC width and $L = 10000$ for the number of logging intervals this would result in $p_c = (1-65536)^{10000} \approx 0,86$ or a 14% chance of a wrongly reconstructed trace. If, however, the start address (or state for FSMs) is logged for each CRC interval, the chance for each interval to be wrongly inferred is still $p = 2^{-r}$, but now there is no error propagation into subsequent intervals anymore. With the assumptions of above there would still be a 14% chance of one trace interval being wrongly inferred during post processing, but this error would remain local in the reconstructed opcode interval. It might even be detectable and correctable using the start address of the next interval and check for continuity with the previous. This ability to detect and correct can be improved when the CRC intervals are overlapping thus that the start address of the next interval is in fact the last address of the previous (for which the CRC signature was logged). Since then the last inferred address of the previous interval must be identical to the logged first address of the next, another backtracking will be performed if there is a mismatch.

The object of the invention will also be solved by an apparatus for post-processing tracing data in a system with static structure that uses the above mentioned method, whereas the apparatus comprising following components: an event representation memory, a hypothesis memory, a trace storage device, a trace data reader, a comparing unit, a result storage device and a result writer, whereas the components are controllable connected over a control finite state machine (FSM). These components can be implemented into an FPGA (field programmable gate array). The advantage is the acceleration of the post processing, especially for long logging intervals with a high number of potential branches per step. At the beginning the event representation memory is filled with the static structure of the system. There are various ways to provide the content of the memory, for example a specific block can be used that reads in an external file or the contents could be made accessible through a standard bus system and pushed from an outside controlling entity (e.g. a connected PC). Once the event representation memory is loaded, the Control finite state machine (FSM) can take over and manage the signature tracing. It requests the trace data reader to read the next trace datagram from the trace storage and load it into the current datagram register. It then fills a Hypothesis Memory step by step, using the contents of the event representation memory. The Hypothesis CRC is calculated and checked against the trace datagram CRC. If there is a match then the FSM triggers the result write block to write out the hypothesis memory, as this is the reconstructed trace. If the CRCs don't match, the FSM has to try the next event or state until all trace datagrams of a trace group have been checked and the actual execution path has been reconstructed.

In a preferred embodiment the event representation memory contains the static structure of the system, whereas the static structure is a sequence of opcodes or states of a hardware state machine and whereas the event representation memory is connected to a standard bus system for filling the event representation memory with a static program code of the system. As already mentioned above there are several possibilities to fill the event representation memory, e.g. by reading an external file that contains the opcodes or states of a hardware finite state machine.

In another embodiment the hypothesis memory is connected to the event representation memory for loading potential events out of the event representation memory. So the hypothesis memory is filled step by step using the content of the event representation memory. The hypothesis memory is necessary and used for post processing a logged trace group and reconstructing the real actual execution code.

In one embodiment the comparing unit comprises a trace data reader for reading a trace datagram out of the trace storage, a CRC calculating device for calculating a hypothesis checksum of a potential event of the hypothetical memory and means for comparing the hypothesis checksum with a checksum of the trace datagram read from the trace storage device. Preferred is that the comparing unit is controllable connected to the control finite state machine.

In another embodiment the result storage device is connected to the result writer whereas the result writer is controllable connected to the control finite state machine according to the comparing result of the comparing unit. If there is a match between the trace datagram CRC and the hypothesis CRC the FSM triggers the result write block to write out the compared event as this is the reconstructed trace. If the CRCs don't match, the FSM has to try the next event of the hypothesis memory or catch a next event from the event representation memory and again compare the new CRC checksums until they match.

This invention describes a method of non-intrusive tracing with low bandwidth. It consists of two parts: Firstly, a novel use of CRC signatures as a means of data compression for trace data. Secondly, a post processing step which could be implemented in either software or hardware to reconstruct the trace from the CRC signatures. The invention solves the problem of getting insight into the internal processing of sub components of a SoC without interfering with the observed system and under the constraint of using only very little hardware and power overhead. It can achieve a low trace bandwidth which allows to either use small internal buffers for intermediate storage or a narrow external interface (like e.g. a UART) to transport the trace data off chip.

The invention can be applied to any observed trace data that can be represented as binary numbers with a strong dependency of the next number from the previous (as it is typical for the program counter of a processor or the states of an FSM). The trace data compressed with the method of this invention can be either streamed off the chip on-the-fly or temporarily stored on-chip and dumped out later. The method of this invention is not applicable for cases in which there is no such strong dependency of the next number from the previous (as would be the case e.g. for a stream of random numbers). In these cases the post processing algorithm to reconstruct the path would have to check against $2^w$ potential branch targets for each step, which would lead to excessive run time and would also be prone to aliasing without any chance to correct or even detect that.

The invention will be illustrated by means of embodiments. The corresponding drawings show

Fig. 1    Example of a System on Chip with Tracing;

Fig. 2    Checksum Hardware for Serial Processing (State of the art);

Fig. 3    Checksum Hardware for Word-Based Processing (State of the art);

Fig. 4    Checksum Hardware for a MISR (State of the art);

Fig. 5    a) an example assembler code, b) directed graph for the example code;

Fig. 6    Exemplary post-processing code for opcode traces;

Fig. 7    Directed Graph for an example code with interrupts;

Fig. 8    Directed Graph for an example code shortened at the first interrupt;

Fig. 9    A state diagram of a hardware state machine;

Fig. 10    Implementation of the post-processing of a FSM into a program code;

Fig. 11    Hardware implementation of the post processing.

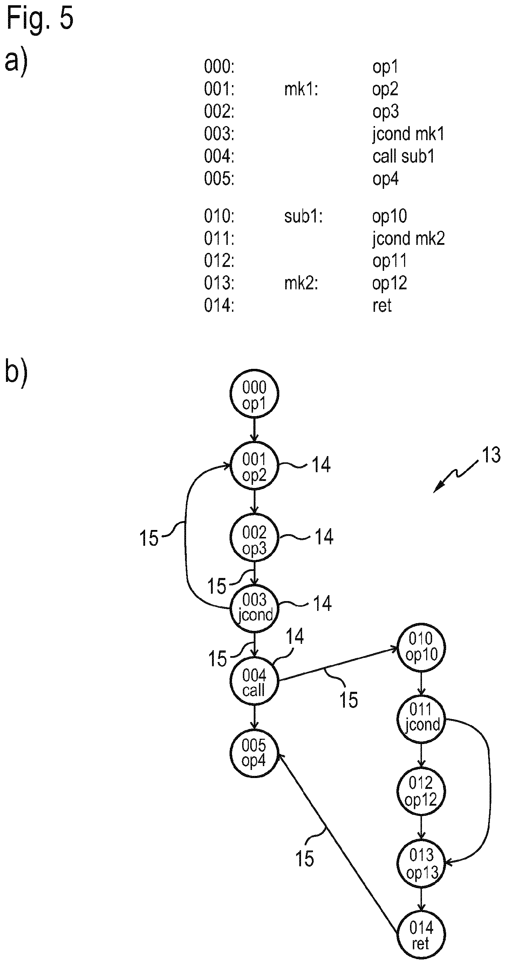

Figure 5a shows a pseudo-assembler code snippet. It will be used to explain the general approach of the invention. Each line of the code is divided into an address part, an optional label to mark jump or call targets and an opcode mnemonic. These mnemonics are just generic placeholders for typical processor operations like loading of immediate values into a register or addition of two registers. For the sake of simplicity, it will be assumed that these opcodes all fit into one memory word each, so subsequent opcodes are located on incremental addresses. The program in figure 5a contains three places where the linear execution might or will be disrupted by a jump to a different address. There are two conditional jumps at addresses 003 and 011, respectively and one unconditional jump at address 004 (the subroutine call). The conditional jumps are controlled by internal processor state, like e.g. a sign flag (if a previous operation returned a negative result) or a zero flag (if a previous operation returned the zero value). These conditional jumps typically are generated by high-level language constructs like

```
if (value1 < value2) then
   operation 1
   else
   operation 2.
```

In general, the program can be described as a directed - but typically not acyclic -, graph 13, where the opcodes form the nodes 14 and the transitions 15 form the edges. Figure 5b shows this graph 13 for the example code from figure 5a. The important aspect for tracing here is that it is typically not possible to predict which program path is taken, as these conditional jumps may be dependent on previous input that is unknown in advance. So, for the assembly code in the example above, different sequences of execution (represented by the address sequences) might be observed in a trace log:

• 000, 001, 002, 003, 004, 010, 011, 012, 013, 014, 005 (no conditional jump was taken)

- 000, 001, 002, 003, 001, 002, 003, 004, 010, 011, 013, 015, 006 (first conditional jump was taken once and also the second was taken)
- More different sequences are possible depending on the number of times the first conditional jump loops back to mk1 and whether or not the second conditional jump is taken.

In general, each conditional jump increases the number of possible sequences by a factor equal to its number of possible targets, i.e. for a given length 1 of the logged trace the number of possible CRC signatures is $\prod_{i=0}^{i<l} t_i$ with $t_i$ designating the number of potential jump targets at step i (where $t_i = 1$ for normal operations and simple calls, $t_i = 2$ for typical conditional jumps and $t_i \gg 1$ for the usage of jump tables). Nevertheless, each different actual path will in general result in a different CRC signature. Assuming a checksum interval of 8 steps, we would find that

$$\sum_{CRC} \{000; 001; 002; 003; 004; 010; 011; 012\} \neq \sum_{CRC} \{000; 001; 002; 003; 001; 002; 003; 004\}$$

It is now the task of post processing to infer the actual code execution path from the start address and the logged signature, based on the knowledge of the static program code. It should be mentioned that the start address could in principle also be the last inferred address from the previous checksum interval. The method for tracing data in a system with a static structure systematically tries each potential path and checks whether this would yield the observed signature. When the hypothesis check fails it uses backtracking to try the next hypothesis. So, the post processing iterates through the log file which contains a list of pairs of interval start address and interval signature and calls the hypothesis checker for each of them. Once a hypothesis is proven for an interval, it implicitly also inferred the actual opcode path, which then can be stored for later visualization.

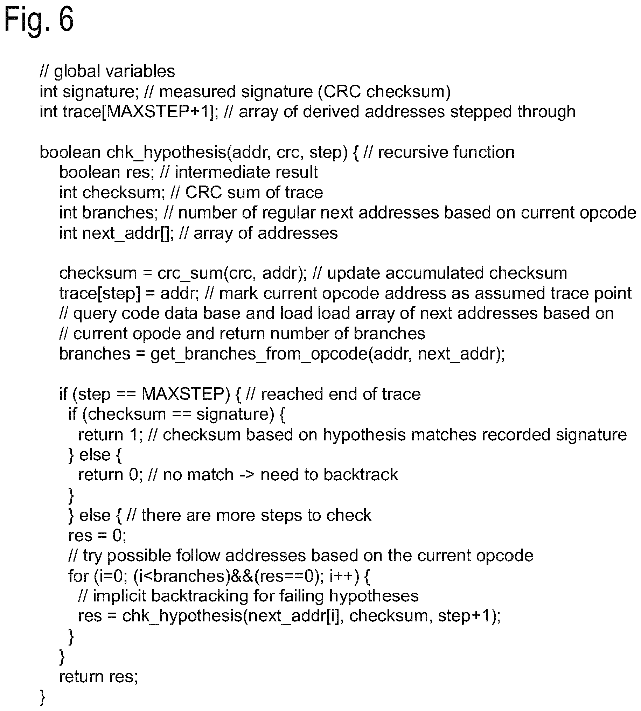

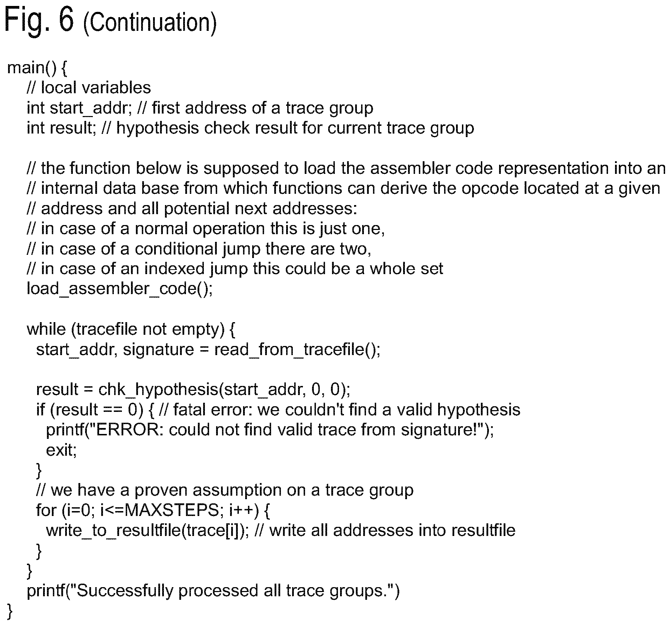

Figure 6 shows the implementation of the inventive method into a program code.

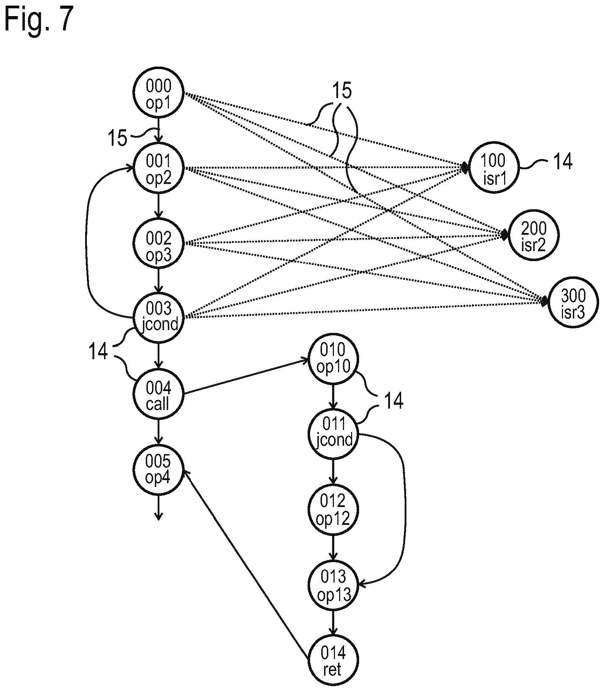

In real embedded processors there is typically also interrupt handling. This complicates things, as now each step has multiple followers and if vectorized interrupts are used there are not just two, but many potential follow addresses. Figure 7 illustrates this for the first four steps of the same example code as figure 5b shows. For the post processing of the log this poses a problem, as now the number of potential paths to check may explode. Basically, the product $\prod_{i=0}^{i<l} t_i$ becomes much bigger as now each step has multiple targets, i.e. $t_i \gg 1$. The inventive method may become prohibitively long due to excessive backtracking. The potentially huge number of hypotheses to check could be reduced if the log is slightly extended by adding e.g. an indication in which step an interrupt occurred, so every loop need not be checked for each and every step if there was backtracking.

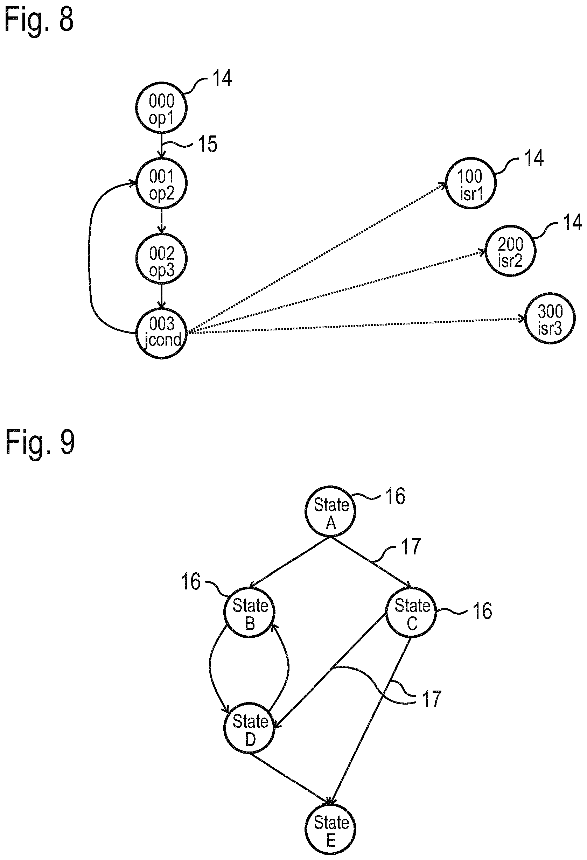

Another way to avoid excessive backtracking could be to cut the logging interval short at the first occurrence of an interrupt (i.e. an interrupt need only be checked for at the last step). This would however increase the necessary trace bandwidth, because the ratio of trace datagrams (containing the pairs of start address and signature) to number of steps per interval would become higher for shortened intervals. The resulting graph for the example from figure 5b with the interrupt occurring at the fourth step is shown in figure 8. This approach of shortening the logging interval in case of an interrupt can also be generalized: An adaptive-length scheme could stop the logging interval after a certain number of jumps taken. Longer periods of pure linear code would then lead to longer logging intervals (and hence a reduced tracing bandwidth), while code sections with a lot of jumps would lead to shorter logging intervals and a higher trace bandwidth but with reduced post processing effort. Therefore the current interval length would also logged in the trace log and will be read from the log file and also use this interval length to write out the reconstructed path.

A hardware state machine (FSM) can also be covered by signature tracing, very similarly as explained above for program paths. Hardware FSMs always contain a state vector that encodes the state as a binary number. An example is shown in figure 9, there are five states, so the state vector must at least contain 3 bits. The most straightforward state encoding would simply be to use 0 for state A, 1 for state B, 2 for state C and so on. However, signature tracing would also work with any other encoding scheme like e.g. a 5-bit one-hot encoding. Whatever encoding is used, it would just be considered a binary number of width w and fed into the CRC logic to calculate the signature for a predefined interval of steps. Again, being dependent on dynamic input from outside the FSM, it is in general not possible to predict upfront the state sequences taken. Different possible sequences might be observed from the FSM from figure 9:

- A, B, D, B, D, E (left branch taken in state A and each branch from state D taken once)

- A, C, D, B, D, E (right branch taken in state A and then again each branch from state D)

- more paths are possible, specifically longer loops between states B and D.

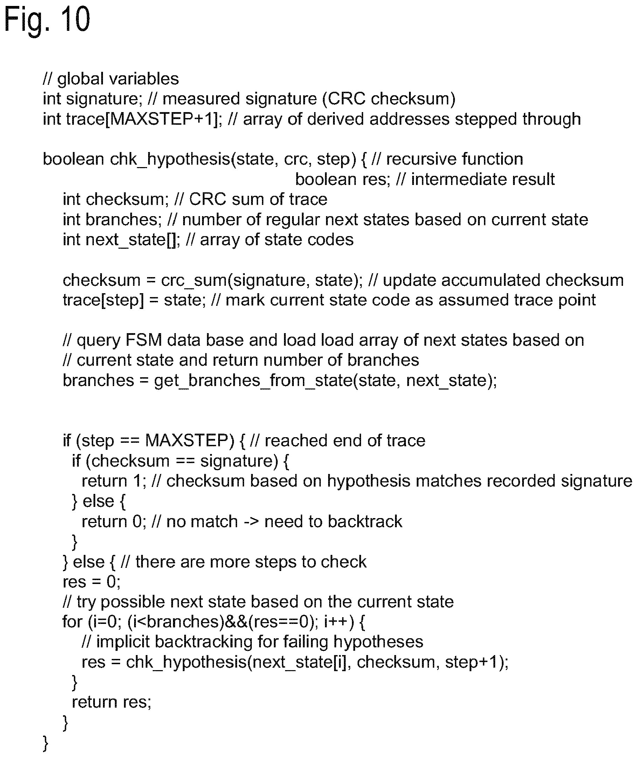

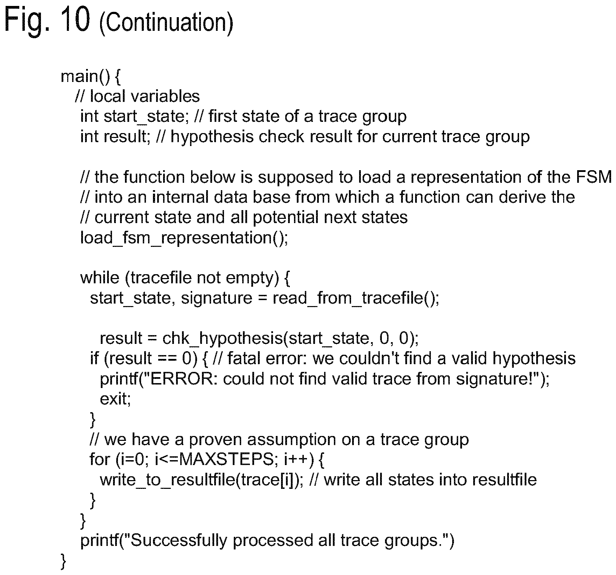

The post processing for an FSM trace is very similar to that of an opcode trace shown above. At the beginning an FSM description will be read while in the opcode trace an assembler listing must be read to be able to determine the respective next nodes in the graph. Further, FSM state encodings require typically less bits than addresses, so the first argument to the chk_hypothes is function is different as shown exemplarily in figure 10.

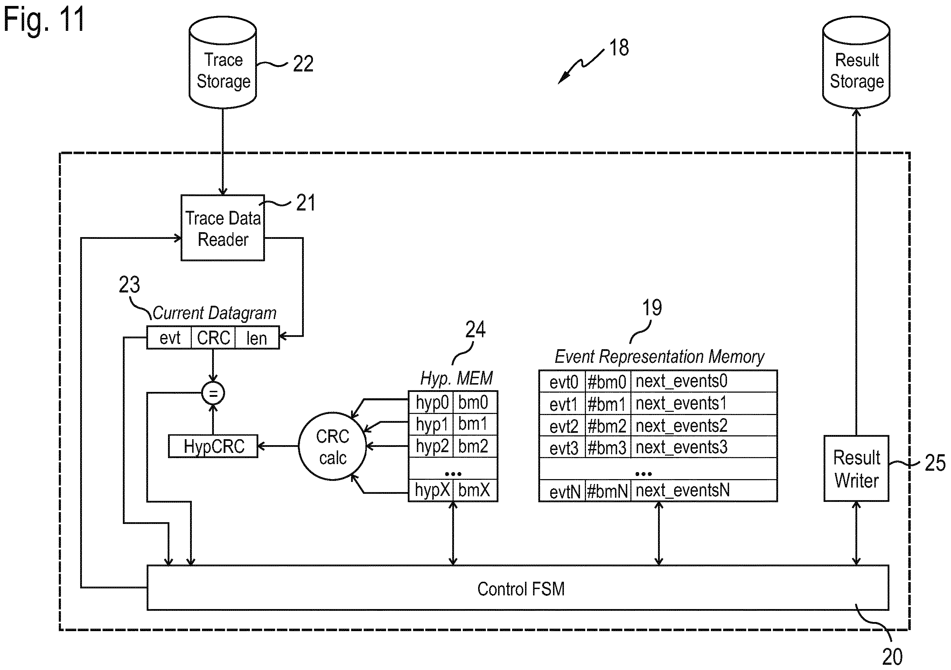

Figure 11 shows an apparatus 18 that can perform the post processing described above. The apparatus can be implemented in FPGA that can be used to accelerate the post processing, especially for long logging intervals with a high number of potential branches per step. Figure 11 presents the principle structure of such a hardware implementation. At the beginning the event representation memory 19 is filled with the static structure of the system. In case of opcode tracing the evt* would be the opcodes, in case of FSM tracing the state, the #brn* fields contain the number of potential branches for evt* and next_event* contains a list of potential next events (potential jump targets for opcodes, potential next states for FSM). For filling this memory 19 various ways are possible: There could be a specific block that reads in an external file or the contents could be made accessible through a standard bus system and pushed from an outside controlling entity (e.g. a connected PC). Once the event representation memory 19 is loaded, the Control FSM 20 can take over. It requests the trace data reader 21 to read the next datagram from the trace storage 22 and load it into the current datagram register 23. It then fills the hypothesis memory 24 step by step, using the contents of the event representation memory 19. The hypothesis CRC is calculated from the hyp* column of the hypothesis memory 24 and checked against the datagram CRC 23. If there is a match then the FSM triggers the result write block 25 to write out the hyp* column of the hypothesis memory 24, as this is the reconstructed trace. If the CRCs do not match, the FSM 20 has to either try the next from the list of next_event list or clear the last line of the hypothesis memory 24 and again try the next event from the respective next_event list of the new last line of the hypothesis memory 24.

Another example of the invention will be described in the following in more detail. Typically, CRC checksums are built over bit strings (much) longer than the CRC itself is wide. This causes aliasing of checksums such that two different bit strings may result in the same CRC checksum. In the context of signature tracing, this means that the post processing may find an opcode path that shows the same signature as the real one, but is different in its actual sequence. For signature tracing a logged path through either a sequence of opcodes or FSM states consists of P steps with binary representations of $w$ bits each (addresses or state encodings), resulting in a logging interval of $P*w = m$ bits. The result is then a CRC signature of $r$ bits. So, there are $2^m$ possible path bit strings that map to $2^r$ different CRCs. This means that $2^{m*r} - 1$ aliased paths map to the same CRC as the correct path. In other words there is a probability of

$$P = \frac{2^{m-r} - 1}{2^m - 1} = \frac{\text{number of aliasing other paths}}{\text{total number of other paths}}$$

for the post processing to infer a wrong path from a given CRC signature. For sufficiently large $m$ this can be simplified to $P \approx 1/2^r$.

Since the probability to infer a wrong logging path is dependent on the width $r$ of the CRC signature, one obvious approach to minimize the potential for false traces is to increase the CRC width. One bit more in the signature brings the probability down to half. The drawback of this approach is increased logic complexity of the CRC circuit (with increased dynamic power and area consumption) and an increased trace bandwidth (more CRC bits to be stored). The start address (or start state) used for the hypothesis checker function could be the last inferred address from the previous logging interval. This, however, together with the probability of aliasing, would increase the likelihood of a wrongly inferred opcode path, especially for the later CRC intervals. With only the inferred last address as the starting point for the next interval, all inferred previous paths must be correct for the last interval to be processed correctly. Each interval has a chance of $2^{-r}$ to be corrupted by aliasing. For the last interval of a long log with $L$ logging intervals this leads to a likelihood of

$$P_c = (1 - 2^{-r})^L$$

of being correctly inferred. With reasonable assumptions of $r = 16$ for the CRC width and $L = 10000$ for the number of logging intervals this would result in $P_c = (1-1/65536)^{10000} \approx 0{,}86$ or a 14% chance of a wrongly reconstructed trace.

If, however, the start address (or state for FSMs) is logged for each CRC interval, the chance for each interval to be wrongly inferred is still $P = 2^{-r}$, but now there is no error propagation into subsequent intervals anymore. With the assumptions of above there would still be a 14% chance of one trace interval being wrongly inferred during post processing, but this error would remain local in the reconstructed opcode interval. It might even be detectable and correctable using the start address of the next interval and check for continuity with the previous. This ability to detect and correct can be improved when the CRC intervals are overlapping thus that the start address of the next interval is in fact the last address of the previous (for which the CRC signature was logged). Since then the last inferred address of the previous interval must be identical to the logged first address of the next.

The raw trace bandwidth depends only on the address width (or FSM state encoding width). For a logging interval of $P$ steps with $w$ bits each, the raw bandwidth is $B = P * w$ bits per interval. When used for opcode tracing a typical address width for embedded processors is 32 bits. Assuming a number of 32 steps per interval this would result in a raw bandwidth of 1024 bits per interval. Using signature tracing the required bandwidth is reduced to $B = w + r$ bits per interval (start address/state plus CRC width), yielding a reduction ratio of $R = (w + r)/(P * w) = 1/P + r/P$. With the numbers from above and a CRC width of 16 this means a reduction to R = (32 + 16)/1024 $\approx$ 4,7%.

Another obvious way to reduce the bandwidth would simply be to increase the number of steps P per interval. However, longer intervals most likely also contain more potential jumps. This could lead to excessive post processing effort. It might be helpful to use an adaptive interval length, i.e. the actual interval length need to become part of the trace interval datagram, hence the trace bandwidth becomes B = $w+r+l$ with $l$ being the number of bits to encode the number of steps of the interval. Assuming a program counter width of 32 bits, a signature width of 16 bit and a maximal logging interval of 32 steps, a trace log datagram would require $B = w+r+l$ = 32+16+5 = 53 bits. In a real application it will be possible to reduce the number of address bits, because embedded processors very rarely cover their complete address space. A value of 16...20 bits seems a reasonable assumption, so the datagram length would be in the range of 37...41 bits. Compared to the raw bandwidth of 32 steps * 32 address bits = 1024 bits per logging interval this would still be a reduction to $\approx$ 4%.

**Method and apparatus for signature tracing**

**reference signs**

| | |
|---|---|
| 1 | System on chip |
| 2 | internal bus system |
| 3 | embedded processor |
| 4 | embedded memory |
| 5 | functional blocks |
| 6 | periphery |
| 7 | external interfaces |
| 8 | trace logic |
| 9 | trace memory |
| 10 | trace storage |
| 11 | flip-flop |
| 12 | XOR gate |
| 13 | graph |
| 14 | node |
| 15 | transition |
| 16 | state |
| 17 | possible next step |
| 18 | apparatus for performing post processing |
| 19 | event representation memory |
| 20 | control FSM |
| 21 | trace data reader |
| 22 | trace storage |
| 23 | current datagram register |
| 24 | hypothesis memory |
| 25 | result write block |

**Claims**

1. A method for tracing data in a system on chip (1) with a static structure for evaluating an actual data stream, the method comprising:

   - loading an event representation file of a static program code,
   - requesting a trace datagram of a trace group from a trace storage (10), whereas the trace group consists of trace datagrams and represents one possible execution path of the program code,

- post-processing the trace datagram by

- calculating a hypothetic checksum of a potential stream of events of the event representation file,
- comparing the hypothetic checksum with a checksum of the trace datagram,
- if the checksums mismatch, backtracking by calculating a new hypothetic checksum and compare it with the checksum of the requested trace datagram, continuing backtracking until they match, whereas an excessive backtracking is avoided by cutting the logging interval short at the first occurrence of an interrupt,

- if the checksums match, requesting a next trace datagram of the trace group and perform the post-processing of the next trace datagram,
- continuing until all trace datagrams of the trace group have been checked, whereas the result represents the reconstructed trace of the data stream.

2. A method for tracing data in a system with a static structure according to claim 1, **wherein** the event representation file is filled with the static structure of the system, whereas the static structure is a sequence of opcodes or states of a hardware state machine.

3. A method for tracing data in a system with a static structure according to claim 1, **wherein** the tracing datagram is formed by compressing raw trace data with cyclic redundancy check (CRC) checksums.

4. A method for tracing data in a system with a static structure according to claim 3, **wherein** the raw trace data is a sequence of events or states whereas for compressing the raw trace data the sequence of events or states is divided into groups of P steps forming an interval respectively and for each interval a start address or a start state and a checksum is logged.

5. A method for tracing data in a system with a static structure according to claim 4, **wherein** the logging interval is performed with an adaptive length 1.

6. A method for tracing data in a system with a static program structure according to claim 5, **wherein** the length 1 of the interval is adapted according to a first occurrence of an interrupt or a certain number of jumps in the program code.

7. A method for tracing data in a system with a static program structure according to claim 2, **wherein** the sequence of opcodes or states of the hardware state machine is encoded as a binary number of width $w$ respectively.

8. A method for tracing data in a system with a static program structure according to claims 2 and 7, **wherein** for each binary number of $w$ bits and each predefined interval of $P$ steps a checksum of $r$ bits is calculated, which results in a logging interval of $P*w = m$ bits.

9. A method for tracing data in a system with a static program structure according to claim 4, **wherein** a continuity check will be performed with the start address of a next interval and a previous interval for avoiding aliasing of checksums.

10. An apparatus for post-processing tracing data in a system with static structure comprising means for carrying out the steps of the method according to claims 1 to 8, comprising following components: an event representation memory (19), a hypothesis memory (24), a trace storage device (10), a trace data reader (21), a comparing unit, a result storage device and a result writer whereas the components are controllable connected over a control finite state machine (FSM) (20).

11. An apparatus for post-processing tracing data in a system with static structure according to claim 10, **wherein** the event representation memory (19) contains the static structure of the system, whereas the static structure is a sequence of opcodes or states of a hardware state machine and whereas the event representation memory (19) is connected to a standard bus system for filling the event representation memory (19) with a static program code of the system.

12. An apparatus for post-processing tracing data in a system with static structure according to claim 10, **wherein** the hypothesis memory (24) is connected to the event representation memory (19) for loading potential events out of the event representation memory (19).

**13.** An apparatus for post-processing tracing data in a system with static structure according to claim 10, **wherein** the comparing unit comprises a trace data reader (21) for reading a trace datagram out of the trace storage (22), a CRC calculating device for calculating a hypothetic checksum of a potential event of the hypothetical memory and means for comparing the hypothetic checksum with a checksum of the trace datagram read from the trace storage device (22).

**14.** An apparatus for post-processing tracing data in a system with static structure according to claim 10, **wherein** the comparing unit is controllable connected to the control finite state machine (20).

**15.** An apparatus for post-processing tracing data in a system with static structure according to claim 10, **wherein** the result storage device is connected to the result writer (25) whereas the result writer (25) is controllable connected to the control finite state machine (20) according to the comparing result of the comparing unit.

**Patentansprüche**

**1.** Verfahren zum Verfolgen von Daten in einem System auf einem Chip (1) mit einer statischen Struktur zum Beurteilen eines tatsächlichen Datenstroms, wobei das Verfahren Folgendes umfasst:

- Laden einer Ereignisrepräsentationsdatei eines statischen Programmcodes,
- Anfordern eines Spurdatagramms einer Spurgruppe aus einem Spurspeicher (10), während die Spurgruppe aus Spurdatagrammen besteht und einen möglichen Ausführungsweg des Programmcodes repräsentiert,
- Nachbearbeiten des Spurdatagramms durch

- Berechnen einer hypothetischen Prüfsumme eines potenziellen Ereignisstroms der Ereignisrepräsentationsdatei,
- Vergleichen der hypothetischen Prüfsumme mit einer Prüfsumme des Spurdatagramms,
- dann, wenn die Prüfsummen nicht übereinstimmen, Zurückverfolgen durch Berechnen einer neuen hypothetischen Prüfsumme und Vergleichen von ihr mit der Prüfsumme des angeforderten Spurdatagramms, Fortfahren, zurückzuverfolgen, bis sie übereinstimmen, während eine exzessive Rückverfolgung durch Abkürzen des Protokollintervalls beim ersten Auftreten einer Unterbrechung vermieden wird,

- dann, wenn die Prüfsummen übereinstimmen, Anfordern eines nächsten Spurdatagramms der Spurgruppe und Ausführen der Nachbearbeitung des nächsten Spurdatagramms,
- Fortfahren, bis alle Spurdatagramme der Spurgruppe überprüft wurden, während das Ergebnis die wiederhergestellte Spur des Datenstroms repräsentiert.

**2.** Verfahren zum Verfolgen von Daten in einem System mit einer statischen Struktur nach Anspruch 1, wobei die Ereignisrepräsentationsdatei mit der statischen Struktur des Systems gefüllt ist, während die statische Struktur eine Folge von Befehlscodes oder Zuständen einer Hardware-Zustandsmaschine ist.

**3.** Verfahren zum Verfolgen von Daten in einem System mit einer statischen Struktur nach Anspruch 1, wobei das Verfolgungsdatagramm durch Komprimieren von Rohspurdaten mit Prüfsummen einer zyklischen Redundanzüberprüfung (CRD-Prüfsummen) gebildet wird.

**4.** Verfahren zum Verfolgen von Daten in einem System mit einer statischen Struktur nach Anspruch 3, wobei die Rohspurdaten eine Folge von Ereignissen oder Zuständen sind, während zum Komprimieren der Rohspurdaten die Folge von Ereignissen oder Zuständen in Gruppen von P Schritten, die jeweils ein Intervall bilden, unterteilt wird und für jedes Intervall eine Startadresse oder ein Startzustand und eine Prüfsumme protokolliert werden.

**5.** Verfahren zum Verfolgen von Daten in einem System mit einer statischen Struktur nach Anspruch 4, wobei das Protokollintervall mit einer adaptiven Länge 1 ausgeführt wird.

**6.** Verfahren zum Verfolgen von Daten in einem System mit einer statischen Programmstruktur nach Anspruch 5, wobei die Länge 1 des Intervalls gemäß einem ersten Auftreten einer Unterbrechung oder einer bestimmten Anzahl von Sprüngen in dem Programmcode angepasst wird.

**7.** Verfahren zum Verfolgen von Daten in einem System mit einer statischen Programmstruktur nach Anspruch 2, wobei die Folge von Befehlscodes oder Zuständen der Hardware-Zustandsmaschine jeweils als eine binäre Anzahl der Breite *w* codiert ist.

8. Verfahren zum Verfolgen von Daten in einem System mit einer statischen Programmstruktur nach den Ansprüchen 2 und 7, wobei für jede binäre Anzahl von *w* Bits und jedes im Voraus definierte Intervall von *P* Schritten eine Prüfsumme von *r* Bits berechnet wird, das ein Protokollintervall von P $\times$ w = *m* Bits ergibt.

9. Verfahren zum Verfolgen von Daten in einem System mit einer statischen Programmstruktur nach Anspruch 4, wobei eine Kontinuitätsprüfung mit der Startadresse eines nächsten Intervalls und eines vorherigen Intervalls ausgeführt werden wird, um ein Aliasing von Prüfsummen zu vermeiden.

10. Vorrichtung zum Nachbearbeiten von Verfolgungsdaten in einem System mit einer statischen Struktur, das Mittel umfasst, um die Schritte des Verfahrens nach den Ansprüchen 1 bis 8 auszuführen, die die folgenden Komponenten umfasst: einen Ereignisrepräsentationsspeicher (19), einen Hypothesespeicher (24), eine Spurspeichervorrichtung (10), ein Spurdatenlesegerät (21), eine Vergleichseinheit, eine Ergebnisspeichervorrichtung und ein Ergebnisschreibgerät, während die Komponenten über eine endliche Steuerzustandsmaschine (Steuer-FSM) steuerbar verbunden sind.

11. Vorrichtung zum Nachbearbeiten von Verfolgungsdaten in einem System mit einer statischen Struktur nach Anspruch 10, wobei der Ereignisrepräsentationsspeicher (19) die statische Struktur des Systems enthält, während die statische Struktur eine Folge von Befehlscodes oder Zuständen einer Hardware-Zustandsmaschine ist und während der Ereignisrepräsentationsspeicher (19) mit einem Standardbussystem zum Füllen des Ereignisrepräsentationsspeichers (19) mit einem statischen Programmcode des Systems verbunden ist.

12. Vorrichtung zum Nachbearbeiten von Verfolgungsdaten in einem System mit einer statischen Struktur nach Anspruch 10, wobei der Hypothesespeicher (24) mit dem Ereignisrepräsentationsspeicher (19) zum Laden potenzieller Ereignisse aus dem Ereignisrepräsentationsspeicher (19) verbunden ist.

13. Vorrichtung zum Nachbearbeiten von Verfolgungsdaten in einem System mit einer statischen Struktur nach Anspruch 10, wobei die Vergleichseinheit ein Spurdatenlesegerät (21) zum Lesen eines Spurdatagramms aus dem Spurspeicher (22), eine CRC-Berechnungsvorrichtung zum Berechnen einer hypothetischen Prüfsumme eines potenziellen Ereignisses des hypothetischen Speichers und Mittel zum Vergleichen der hypothetischen Prüfsumme mit einer Prüfsumme des Spurdatagramms, das aus der Spurspeichervorrichtung (22) gelesen wird, umfasst.

14. Vorrichtung zum Nachbearbeiten von Verfolgungsdaten in einem System mit einer statischen Struktur nach Anspruch 10, wobei die Vergleichseinheit mit der endlichen Steuerzustandsmaschine (20) steuerbar verbunden ist.

15. Vorrichtung zum Nachbearbeiten von Verfolgungsdaten in einem System mit einer statischen Struktur nach Anspruch 10, wobei die Ergebnisspeichervorrichtung mit dem Ergebnisschreibgerät (25) verbunden ist, während das Ergebnisschreibgerät (25) mit der endlichen Steuerzustandsmaschine (20) gemäß dem Vergleichsergebnis der Vergleichseinheit steuerbar verbunden ist.

## Revendications

1. Procédé de suivi de données dans un système sur puce (1) à structure statique pour évaluer un flux de données effectif, le procédé comprenant :

    - le chargement d'un fichier de représentation d'événement d'un code de programme statique,
    - la requête d'un datagramme de suivi d'un groupe de suivis auprès d'une mémoire de suivis (10), le groupe de suivis consistant en des datagrammes de suivis et représentant un chemin d'exécution possible du code de programme,
    - le post-traitement du datagramme de suivi en

        - calculant un total de contrôle hypothétique d'un flux potentiel d'événement du fichier de représentation d'événement,
        - comparant le total de contrôle hypothétique à un total de contrôle du datagramme de suivi,
        - si les totaux de contrôle ne correspondent pas, revenant en arrière en calculant un nouveau total de contrôle hypothétique et le comparant au total de contrôle du datagramme de suivi requis, continuant le retour en arrière jusqu'à ce qu'ils correspondent, un retour en arrière excessif étant évité en abrégeant l'intervalle de consignation à la première occurrence d'une interruption,

- si les totaux de contrôle correspondent, la requête d'un diagramme de suivi suivant du groupe de suivis et la réalisation du post-traitement du datagramme de suivi suivant,
- la continuation jusqu'à ce que tous les datagrammes de suivi du groupe de suivis aient été vérifiés, le résultat représentant le suivi reconstruit du flux de données.

2. Procédé de suivi de données dans un système à structure statique selon la revendication 1, **dans lequel** le fichier de représentation d'événement est rempli par la structure statique du système, la structure statique étant une séquence de codes opérationnels ou d'états d'un automate fini matériel.

3. Procédé de suivi de données dans un système à structure statique selon la revendication 1, **dans lequel** le datagramme de suivi est formé en comprimant des données de suivi brutes avec des totaux de contrôle de contrôle de redondance cyclique (CRC).

4. Procédé de suivi de données dans un système à structure statique selon la revendication 3, **dans lequel** les données de suivi brutes sont une séquence d'événements ou d'états, dans lequel pour la compression des données de suivi brutes la séquence d'événements ou d'états est divisée en groupes de P pas formant respectivement un intervalle et pour chaque intervalle une adresse de départ ou un état de départ et un total de contrôle sont consignés.

5. Procédé de suivi de données dans un système à structure statique selon la revendication 4, **dans lequel** l'intervalle de consignation est réalisé avec une longueur adaptative de 1.

6. Procédé de suivi de données dans un système à structure de programme statique selon la revendication 5, **dans lequel** la longueur 1 de l'intervalle est adaptée en fonction d'une première occurrence d'une interruption ou d'un certain nombre de sauts dans le code de programme.

7. Procédé de suivi de données dans un système à structure de programme statique selon la revendication 2, **dans lequel** la séquence de codes opérationnels ou d'états de l'automate fini matériel est codée sous forme de nombre binaire de largeur $w$ respectivement.

8. Procédé de suivi de données dans un système à structure de programme statique selon les revendications 2 et 7, **dans lequel** pour chaque nombre binaire de $w$ bits et chaque intervalle prédéfini de $P$ pas, un total de contrôle de $r$ bits est calculé, lequel entraîne un intervalle de consignation de $P*w = m$ bits.

9. Procédé de suivi de données dans un système à structure de programme statique selon la revendication 4, **dans lequel** un contrôle de continuité sera réalisé avec l'adresse de départ d'un intervalle suivant et d'un intervalle précédent pour éviter un crénelage des totaux de contrôle.

10. Appareil de post-traitement de données de suivi dans un système à structure statique comprenant des moyens pour réaliser les étapes du procédé selon les revendications 1 à 8, comprenant les composants suivants : une mémoire de représentations d'événements (19), une mémoire d'hypothèses (24), un dispositif de mémorisation de suivis (10), un lecteur de données de suivis (21), une unité de comparaison, un dispositif de mémorisation de résultats et un scripteur de résultats, dans lequel les composants peuvent être connectés de manière contrôlée par le biais d'n automate fini (FSM) de commande (20).

11. Appareil de post-traitement de données de suivi dans un système à structure statique selon la revendication 10, **dans lequel** la mémoire de représentations d'événements (19) contient la structure statique du système, dans lequel la structure statique est une séquence de codes opérationnels ou d'état d'un automate fini matériel et dans lequel la mémoire de représentations d'événements (19) est connectée à un système de bus standard pour remplir la mémoire de représentations d'événements (19) avec un code de programme statique du système.

12. Appareil de post-traitement de données de suivi dans un système à structure statique selon la revendication 10, **dans lequel** la mémoire d'hypothèses (24) est connectée à la mémoire de représentations d'événements (19) pour charger des événements potentiels à partir de la mémoire de représentations d'événements (19).

**13.** Appareil de post-traitement de données de suivi dans un système à structure statique selon la revendication 10, **dans lequel** l'unité de comparaison comprend un lecteur de données de suivi (21) pour lire un datagramme de suivi à partir de la mémoire de suivis (22), un dispositif de calcul de CRC pour calculer un total de contrôle hypothétique d'un événement potentiel de la mémoire hypothétique et un moyen de comparaison du total de contrôle hypothétique à un total de contrôle du datagramme de suivi lu à partir du dispositif de mémorisation de suivis (22).

**14.** Appareil de post-traitement de données de suivi dans un système à structure statique selon la revendication 10, **dans lequel** l'unité de comparaison est connectée de manière contrôlable à l'automate fini de commande (20).

**15.** Appareil de post-traitement de données de suivi dans un système à structure statique selon la revendication 10, **dans lequel** le dispositif de mémorisation de résultats est connecté au scripteur de résultats (25), dans lequel le scripteur de résultats (25) est connecté de manière contrôlable à l'automate fini de commande (20) en fonction du résultat de comparaison de l'unité de comparaison.

# Fig. 1

# Fig. 2

# Fig.3

# Fig. 4

# Fig. 5

## a)

```
000:                    op1
001:        mk1:        op2
002:                    op3
003:                    jcond mk1
004:                    call sub1
005:                    op4

010:        sub1:       op10
011:                    jcond mk2
012:                    op11
013:        mk2:        op12
014:                    ret
```

## b)

# Fig. 6

```
// global variables
int signature; // measured signature (CRC checksum)
int trace[MAXSTEP+1]; // array of derived addresses stepped through

boolean chk_hypothesis(addr, crc, step) { // recursive function
    boolean res; // intermediate result
    int checksum; // CRC sum of trace
    int branches; // number of regular next addresses based on current opcode
    int next_addr[]; // array of addresses

    checksum = crc_sum(crc, addr); // update accumulated checksum
    trace[step] = addr; // mark current opcode address as assumed trace point
    // query code data base and load load array of next addresses based on
    // current opode and return number of branches
    branches = get_branches_from_opcode(addr, next_addr);

    if (step == MAXSTEP) { // reached end of trace
      if (checksum == signature) {
        return 1; // checksum based on hypothesis matches recorded signature
      } else {
        return 0; // no match -> need to backtrack
      }
    } else { // there are more steps to check
      res = 0;
      // try possible follow addresses based on the current opcode
      for (i=0; (i<branches)&&(res==0); i++) {
        // implicit backtracking for failing hypotheses
        res = chk_hypothesis(next_addr[i], checksum, step+1);
      }
    }
    return res;
}
```

# Fig. 6 (Continuation)

```
main() {
    // local variables
    int start_addr; // first address of a trace group
    int result; // hypothesis check result for current trace group

    // the function below is supposed to load the assembler code representation into an
    // internal data base from which functions can derive the opcode located at a given
    // address and all potential next addresses:
    // in case of a normal operation this is just one,
    // in case of a conditional jump there are two,
    // in case of an indexed jump this could be a whole set
    load_assembler_code();

    while (tracefile not empty) {
        start_addr, signature = read_from_tracefile();

        result = chk_hypothesis(start_addr, 0, 0);
        if (result == 0) { // fatal error: we couldn't find a valid hypothesis
            printf("ERROR: could not find valid trace from signature!");
            exit;
        }
        // we have a proven assumption on a trace group
        for (i=0; i<=MAXSTEPS; i++) {
            write_to_resultfile(trace[i]); // write all addresses into resultfile
        }
    }
    printf("Successfully processed all trace groups.")
}
```

Fig. 7

Fig. 8

Fig. 9

# Fig. 10

```
// global variables
int signature; // measured signature (CRC checksum)
int trace[MAXSTEP+1]; // array of derived addresses stepped through

boolean chk_hypothesis(state, crc, step) { // recursive function
                                    boolean res; // intermediate result
    int checksum; // CRC sum of trace
    int branches; // number of regular next states based on current state
    int next_state[]; // array of state codes

    checksum = crc_sum(signature, state); // update accumulated checksum
    trace[step] = state; // mark current state code as assumed trace point

    // query FSM data base and load load array of next states based on
    // current state and return number of branches
    branches = get_branches_from_state(state, next_state);


    if (step == MAXSTEP) { // reached end of trace
      if (checksum == signature) {
        return 1; // checksum based on hypothesis matches recorded signature
      } else {
        return 0; // no match -> need to backtrack
      }
    } else { // there are more steps to check
    res = 0;
    // try possible next state based on the current state
    for (i=0; (i<branches)&&(res==0); i++) {
        // implicit backtracking for failing hypotheses
        res = chk_hypothesis(next_state[i], checksum, step+1);
      }
      return res;
    }
}
```

# Fig. 10 (Continuation)

```
main() {
  // local variables
  int start_state; // first state of a trace group
  int result; // hypothesis check result for current trace group

  // the function below is supposed to load a representation of the FSM
  // into an internal data base from which a function can derive the
  // current state and all potential next states
  load_fsm_representation();

  while (tracefile not empty) {
    start_state, signature = read_from_tracefile();

    result = chk_hypothesis(start_state, 0, 0);
    if (result == 0) { // fatal error: we couldn't find a valid hypothesis
      printf("ERROR: could not find valid trace from signature!");
      exit;
    }
    // we have a proven assumption on a trace group
    for (i=0; i<=MAXSTEPS; i++) {
      write_to_resultfile(trace[i]); // write all states into resultfile
    }
  }
  printf("Successfully processed all trace groups.")
}
```

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080155355 A1